# EUROPÄISCHE PATENTSCHRIFT

(11) **EP 2 336 566 B1**
(45) Veröffentlichungstag und Bekanntmachung des Hinweises auf die Patenterteilung: **25.06.2014**
(21) Anmeldenummer: 10194841.2
(22) Anmeldetag: 14.12.2010
(51) Int. Cl.: F01C 21/02, F04C 18/16, F04C 2/16, F16C 23/06

(54) **Wälzlageranordnung**
Rolling bearing arrangement
Ensemble palier à roulement

(30) Priorität: 15.12.2009 DE 102009058354
(43) Veröffentlichungstag der Anmeldung: 22.06.2011
(73) Patentinhaber: Aktiebolaget SKF, 41 550 Göteborg (SE)
(72) Erfinder: Hudert, Fabian, 97422 Schweinfurt (DE)
(74) Vertreter: Schonecke, Mitja

(56) Entgegenhaltungen:
- AT-B- 245 348
- DE-C- 589 119
- DE-U1- 29 805 351
- US-A- 4 073 442

## Beschreibung

Die Erfindung betrifft eine Wälzlageranordnung zum drehbaren Lagern eines mit einer Welle verbundenen Maschinenbauteils.

In Maschinen kann es notwendig sein, ein in einem Gehäuse mittels einer Welle drehbar gelagertes Maschinenbauteil in axialer Richtung auf ein bestimmtes Maß einzustellen. So kann es erforderlich sein, beispielsweise eine Stirnseite des Maschinenbauteils bezüglich einer Gehäusewand auf ein bestimmtes Spaltmaß einzustellen. Bei Schraubenmaschinen, wie beispielsweise Schraubenkompressoren, wirkt sich die Größe des Spaltmaßes zwischen Schraube und Gehäuse auf die Dichtheit und damit auf den Wirkungsgrad der Kompressormaschine aus. Insbesondere in diesen Fällen ist es deshalb gewünscht, einen möglichst kleinen Spalt zu realisieren, der z.B. nahe Null liegt, wobei jedoch keine Verschleiß verursachende Berührung von drehenden und stehenden Maschinenbauteilen stattfinden sollte. Üblicherweise werden zur Einstellung von relativ kleinen Spaltmaßen axial relativ steife Wälzlageranordnungen eingesetzt und ein definierter Spalt während der Montage der Wälzlageranordnung eingestellt, beispielsweise durch Unterlegen von Distanzringen oder durch Verstellen von Einstellgewinden an der Welle. Nachteilig ist hierbei jedoch, dass ein Einstellen während der Montage manuell aufwändig ist und Einflüsse, die sich während des Betriebs der Maschine auf die Spaltweite auswirken, unberücksichtigt bleiben. So ist es bei einer manuellen Montageeinstellung mit Distanzringen oder Einstellgewinden erforderlich, eine auftretende Spaltweitenänderung aufgrund Temperaturveränderungen während des Betriebs bereits bei der Montage zu berücksichtigen. Dabei muss oft ein unerwünscht großes Spaltmaß akzeptiert werden, um beispielsweise bei einer späteren Erwärmung der Maschine mit unterschiedlichen Ausdehnungen verschiedener Maschinenbauteile einen Verlust eines relativ kleinen Spaltes bis hin zu einem Anlaufen des drehenden Maschinebauteils zu riskieren.

Die DE 298 05 351 U1 beschreibt eine Lageranordnung für eine drehbare, Mittel zum Leisten von Arbeit während ihrer Rotation tragende Welle die radial mit wenigstens einem Radiallager gelagert ist, das eine Bewegung der Welle in axialer Richtung zulässt, und Mittel besitzt, die zum Abstützen der Welle in axialer Richtung dienen, wobei die Mittel zum Abstützen der Welle in axialer Richtung ein Element sind, das an der Welle zur gemeinsamen Rotation mit dieser starr befestigt und so angeordnet ist, dass es durch elektromagnetische Kräfte beeinflussbar ist, die von einer stationären Stelle durch eine Steuervorrichtung beeinflusst ausgehen, auf welche Sensormittel einwirken, mit welchen die momentane Axialstellung der Welle zum exakten axialen Positionieren der Welle und kontinuierlichen axialen Verstellen bei Stellungswechseln erfassbar ist, die zum Optimieren des durch die von der Welle getragenen Mittel geleisteten Arbeitsergebnisses erforderlich sind.

Aufgabe der Erfindung ist es, eine Wälzlageranordnung zu schaffen, mit der ein Spaltmaß zwischen einem drehenden Maschinenbauteil und einem Gehäuse einer Maschine insbesondere während des Betriebs der Maschine zuverlässig eingehalten werden kann.

Die Aufgabe der Erfindung wird gelöst durch eine Wälzlageranordnung zum drehbaren Lagern eines mit einer Welle verbundenen Maschinenbauteils in einer Position bezüglich eines Referenzbauteils, aufweisend ein Gehäuse, eine Schraubenmaschine, eine mit einer Welle verbundene Schraube als Maschinenbauteil der Schraubenmaschine, ein Referenzbauteil der Schraubenmaschine, ein zwischen der Schraube und dem Referenzbauteil sich bildender Axialspalt, ein Radiallager, ein positionierbares Axiallager und eine Einstellvorrichtung zum Einstellen eines Axialspaltes zwischen dem Maschinenbauteil und dem Referenzbauteil durch automatisches Verstellen des positionierbaren Axiallagers, bei der die Einstellvorrichtung eine hydraulische Stelleinrichtung zum Positionieren des Axiallagers aufweist und eingerichtet ist, das Axiallager in Abhängigkeit eines Innendruckes im Gehäuse zu verstellen, um den Axialspalt auf einen Sollwert zu regeln. Durch eine hydraulische Stelleinrichtung können schnell erfolgende Störschwankungen, wie sie beispielsweise bei Störungen des magnetischen Feldes einer Magnetlagerung auftreten können, besser kompensiert werden. Durch eine hydraulische Stelleinrichtung können auch größere Stellkräfte auf das mittels des Axiallagers gelagerten Maschinenbauteil ausgeübt werden.

Das Referenzbauteil kann ein Gehäuse, insbesondere das Gehäuse sein, in dem das drehende Maschinenbauteil angeordnet ist.

Die hydraulische Stelleinrichtung kann insbesondere eine Hydraulikmutter aufweisen. Das verstellbare Axiallager kann insbesondere über fluidischen Druck der Maschine nach dem Prinzip einer Hydraulikmutter nachgeführt werden.

Die Einstellvorrichtung ist eine hydraulische Stelleinrichtung zum Positionieren des Axiallagers, die eingerichtet ist, das Axiallager in Abhängigkeit eines Innendruckes im Gehäuse zu verstellen, um den Axialspalt auf einen Sollwert zu regeln.

So kann die Wälzlageranordnung zum drehbaren Lagern eines mit einer Welle verbundenen Maschinenbauteils in einem Gehäuse, ein Radiallager zum radialen Führen der Welle bezüglich des Gehäuses, ein positionierbares Axiallager zum axialen Führen der Welle bezüglich des Gehäuses in unterschiedlichen axialen Positionen, und eine hydraulische Stelleinrichtung zum Einstellen eines Axialspaltes zwischen dem Maschinenbauteil und dem Gehäuse durch automatisches Verstellen des positionierbaren Axiallagers aufweisen. Indem die Wälzlageranordnung ein hydraulisch positionierbares Axiallager aufweist, kann durch eine hydraulische Einstellvorrichtung ein Axialspalt zwischen einem Maschinenbauteil und dem Referenzbauteil bzw. dem Gehäuse genauer eingestellt werden, wodurch beispielsweise schnell erfolgende Störschwankungen während des Betriebs der Wälzlageranordnung kompensiert werden können. Außerdem kann durch das hydraulische Einstellen der Axialspalt genauer eingestellt und gegebenenfalls auf wenige Mikrometer reduziert werden. Durch Einstellen eines relativ kleinen Axialspaltes kann beispielsweise bei Schraubenmaschinen, wie beispielsweise Schraubenkompressoren, der Wirkungsgrad verbessert werden.

Die Einstellvorrichtung kann eingerichtet sein, den Axialspalt zwischen dem Maschinenbauteil und dem Referenzbauteil bzw. dem Gehäuse während des Betriebs der Wälzlageranordnung einzustellen, insbesondere nachzustellen. Durch ein Einstellen und/oder Nachstellen des Axialspaltes während des Betriebs der Wälzlageranordnung kann der Axialspalt dynamisch eingestellt werden. So kann beispielsweise der Axialspalt nachgestellt werden, wenn eine Spaltweitenänderung aufgrund Temperaturveränderungen während des Betriebs auftritt. Dies hat den Vorteil, dass in jedem Betriebzustand ein relativ kleiner, wenn nicht gar minimaler Axialspalt eingestellt werden kann, ohne dass Spaltaufmaße beispielsweise zur Verhinderung eines Anlaufens aufgrund einer Temperaturausdehnung der Maschinenbauteile berücksichtigt werden müssen. So kann mit einem erfindungsgemäßen Nachstellen des Axialspaltes während des Betriebs der Wälzlageranordnung insbesondere ein gewünschter Minimalspalt sowohl in einem Kaltzustand als auch in einem Heißzustand der Wälzlageranordnung eingehalten werden.

In allen erfindungsgemäßen Ausgestaltungen kann die hydraulische Einstellvorrichtung eine Ermittlungseinrichtung für den Axialspalt aufweisen und eingerichtet sein, das positionierbare Axiallager in Abhängigkeit eines von der Ermittlungseinrichtung ermittelten Wertes zu verstellen. Die Ermittlungseinrichtung dient dazu, den momentanen Axialspalt zu bestimmen. Die hydraulische Einstellvorrichtung kann dabei den durch die Ermittlungseinrichtung ermittelten Wert des momentanen Axialspalts mit einem vorgegebenen Sollwert für den Axialspalt vergleichen und bei einer Abweichung des Istwertes von momentanem Axialspalt mit dem Sollwert die Abweichung zu bestimmen, die ein Maß für das Verstellen des positionierbaren Axiallagers liefert. Die hydraulische Einstellvorrichtung kann den momentanen Axialspalt durch die Ermittlungseinrichtung einmalig, mehrmalig oder fortlaufend insbesondere während der Dauer des Betriebs der Wälzlageranordnung bestimmen.

Die hydraulische Einstellvorrichtung kann insbesondere dazu eingerichtet sein, den Axialspalt aufgrund eines von der Ermittlungseinrichtung bestimmten Wertes zu regeln. Durch eine hydraulische Regelung des Axialspaltes während des Betriebs der Wälzlageranordnung können betriebsbedingte Einflüsse auf den Axialspalt besser kompensiert werden und trotzdem Längenausdehnungen von Maschinenbauteilen und/oder des Gehäuses kontinuierlich oder in diskreten Zeitabständen ausgeglichen werden.

Die Ermittlungseinrichtung kann für den Axialspalt wenigstens einen den Axialspalt erfassenden Sensor aufweisen. Der Sensor kann die Spaltweite entweder direkt oder indirekt bestimmen. Der Sensor kann die Spaltweite messen. Der Sensor kann ein elektrischer Sensor, insbesondere ein berührungslos arbeitender Abstandssensor sein.

Bei Verwendung eines Sensors kann die hydraulische Einstellvorrichtung eingerichtet sein, den Axialspalt aufgrund eines von dem Sensor bestimmten Messwertes zu regeln. Die Einstellvorrichtung kann dazu einen Regler aufweisen. Der Messwert des Sensors bildet dabei einen Istwert, der mit einem gespeicherten bzw. vorgegebenen Sollwert verglichen wird, um eine Abweichung zu bestimmen, die ein Maß für das Verstellen des positionierbaren Axiallagers durch die Einstellvorrichtung liefert.

In allen Ausgestaltungen kann der Sensor eingerichtet sein, einen axialen Abstand zwischen dem Maschinenbauteil und dem Referenzbauteil, insbesondere dem Gehäuse zu messen, insbesondere in einem Messbereich zwischen 500 und 5 Mikrometer zu messen. Durch die Verwendung geeigneter Sensoren kann der Axialspalt auf wenige Mirkometer reduziert werden. Neben einer möglichen Regelung während rend des Betriebs der hydraulisch positionierbaren Wälzlageranordnung kann durch den Einsatz von Sensoren, insbesondere Abstandssensoren auch die Montage der Wälzlageranordnung vereinfacht werden. Der Sensor oder auch mehrere Sensoren können zwischen einem feststehenden Gehäuse und einem drehendem Maschinenbauteil angeordnet sein.

Der Sensor bzw. die Sensoren können insbesondere an dem Referenzbauteil, insbesondere am Gehäuse angeordnet und zur Messung eines axialen Abstands zwischen einer Bezugsfläche des Maschinenbauteils und dem Sensor ausgebildet sein. Der Sensor bzw. die Sensoren können am Gehäuse befestigt und insbesondere in das Gehäuse integriert sein. Bezugsfläche kann insbesondere eine dem Gehäuse zugewandte Seite des Maschinenbauteils sein. Die zugewandte Seite des Maschinenbauteils und eine Innenwand des Gehäuses begrenzen insoweit den zu verstellenden Axialspalt.

Das Maschinenbauteil ist eine Schraube einer Schraubenmaschine. Die Schraube kann insbesondere diejenige eines Schraubenkompressors oder einer Schraubenpumpe sein. Besonders bei Schraubenmaschinen, wie beispielsweise Schraubenkompressoren oder Schraubenpumpen wirkt sich die Größe des Spaltmaßes zwischen Schraube und Gehäuse auf die Dichtheit und damit auf den Wirkungsgrad der Kompressormaschine aus. Insbesondere in diesen Fällen ist es deshalb gewünscht, einen möglichst kleinen Spalt zu realisieren, der nahe Null liegt, wobei jedoch keine Verschleiß verursachende Berührung von drehenden und stehenden Maschinenbauteilen stattfinden soll. So kann bei Schraubenmaschinen die axiale Position der Schraube geregelt werden und zwar insbesondere auf ein sehr geringes Maß, um den Wirkungsgrad der Schraubenmaschine zu erhöhen.

Falls in vorteilhaften Ausführungsformen auf Schrägkugellager verzichtet werden kann, die mitunter nur deutlich drehzahlbegrenzt betrieben werden können, kann die Betriebsdrehzahl bei erfindungsgemäßen Wälzlageranordnungen, bei denen durch eine hydraulische Einstellvorrichtung ein Axialspalt zwischen einem Maschinen-bauteil und einem Gehäuse automatisch eingestellt werden kann, angehoben werden.

Die beigefügten schematischen Zeichnungen zeigen:
- Fig. 1: eine Schnittansicht eines allgemeinen Beispiels einer Wälzlageranordnung einer Schraubenmaschine mit einem Radiallager und einem Axiallager mit axialer hydraulischer Nachführung; bei dem Beispiel der Figur 1 handelt es sich nicht um eine Ausführungsform der Erfindung, sondern um ein Beispiel, das das Verständnis der Erfindung erleichtern soll;
- Fig. 2: eine Schnittansicht einer speziellen erfinderischen Ausführung einer Wälzlageranordnung einer Schraubenmaschine mit einem Radiallager, einem Axiallager und einer hydraulischen Nachführung mit Druckregelung.

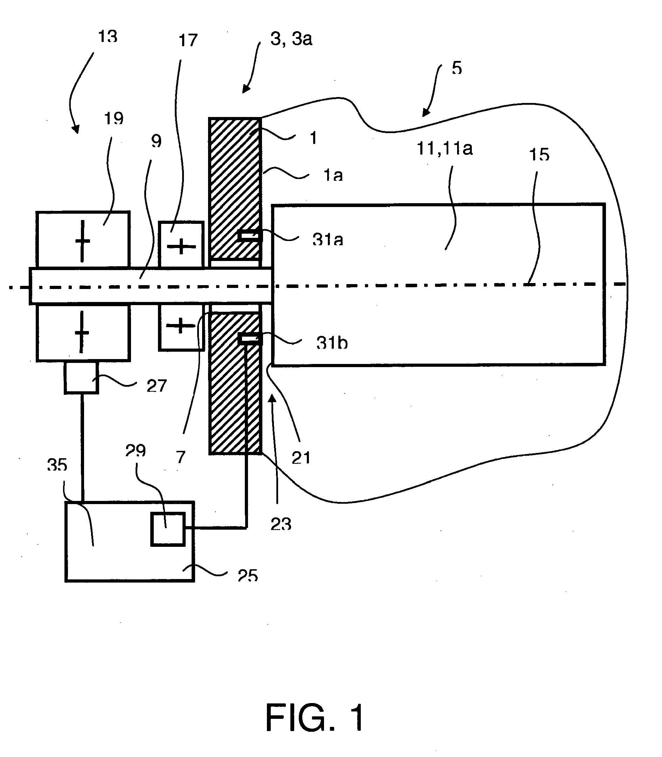

In der Fig. 1 ist ein Wandabschnitt 1 eines als Gehäuse 3a ausgebildeten Referenzbauteils 3 einer Schraubenmaschine 5 dargestellt. Der Wandabschnitt 1 weist eine Öffnung 7 zum Hindurchführen einer Welle 9 auf. Auf der Welle 9 sitzt ein Maschinenbauteil 11, das im dargestellten Ausführungsbeispiel eine Schraube 11a der Schraubenmaschine 5 ist. Das Maschinenbauteil 11 bzw. die Schraube 11a ist mittel einer Wälzlageranordnung 13 um die Achse 15 drehbar in dem Gehäuse 3a gelagert. Die Wälzlageranordnung 13 weist ein Radiallager 17 und ein Axiallager 19 auf. Das Radiallager 17 führt die Welle 9 in radialen Richtungen zur Achse 15. Das Axiallager 19 führt die Welle 9 in axialer Richtung d.h. in Richtung der Längserstreckung der Welle 9 bzw. der Achse 15. Die Schraube 11a ist mit der Welle 9 fest verbunden. Eine Bezugsfläche 21 bzw. Stirnseite 21a der Schraube 11a weist auf eine Innenseite 1a des Wandabschnitts 1 des Gehäuses 3a zu. Durch die Stirnseite 21a der Schraube 11 a und der Innenseite 1a des Wandabschnitts 1 des Gehäuses 3a wird ein Axialspalt 23 gebildet.

Um den Axialspalt 23 automatisch einstellen bzw. verstellen zu können, ist das Axiallager 19 axial positionierbar ausgebildet. Dazu ist das positionierbare Axiallager 19 mit einer Einstellvorrichtung 25 verbunden. Die Einstellvorrichtung 25 weist dabei eine hydraulische Stelleinrichtung 37 auf, mittels derer das Axiallager 19 axial umpositioniert werden kann, um den Axialspalt 23 zu verstellen. Die Einstellvorrichtung 25 weist außerdem eine Ermittlungseinrichtung 29 auf. Die Ermittlungseinrichtung 29 ist mit einem ersten Sensor 31a und gegebenenfalls mit wenigstens einem weiteren Sensor 31b verbunden.

Die Ermittlungseinrichtung 29 ermittelt einen Wert des Axialspaltes 23. Auf Grundlage des von der Ermittlungseinrichtung 29 ermittelten Wertes wird durch die Einstellvorrichtung 25 die hydraulische Stelleinrichtung 37 angesteuert und dadurch der Axialspalt 23 auf einen Sollwert eingestellt bzw. verstellt. Die Einstellvorrichtung 25 kann insbesondere einen entsprechenden Regler aufweisen. Der Wert des Axialspaltes 23 kann beispielsweise eine gemessene Breite des Axialspaltes 23 sein. Der Axialspalt 23 kann durch wenigstens einen Sensor 31a, 31b ermittelt werden. Der Sensor 31a, 31b kann ausgebildet sein, den Axialspalte 23 zu messen. Der Sensor 31a, 31b kann insbesondere dazu ausgebildet sein, den Axialspalte 23 zwischen der Bezugsfläche 21 bzw. der Stirnseite 21a der Schraube 11a und der Innenseite 1a des Wandabschnitts 1 des Gehäuses 3a zu messen. Der wenigstens eine Sensor 31a, 31b ist in der dargestellten ersten Ausführung in den Wandabschnitt 1 des Gehäuses 3a integriert.

Die Ermittlungseinrichtung 29 kann einen Wert des Axialspaltes 23 ermitteln. Auf Grundlage des von der Ermittlungseinrichtung 29 ermittelten Wertes wird durch die Einstellvorrichtung 25 der Regler 35 betrieben und dadurch der Axialspalt 23 auf einen Sollwert eingestellt bzw. verstellt.

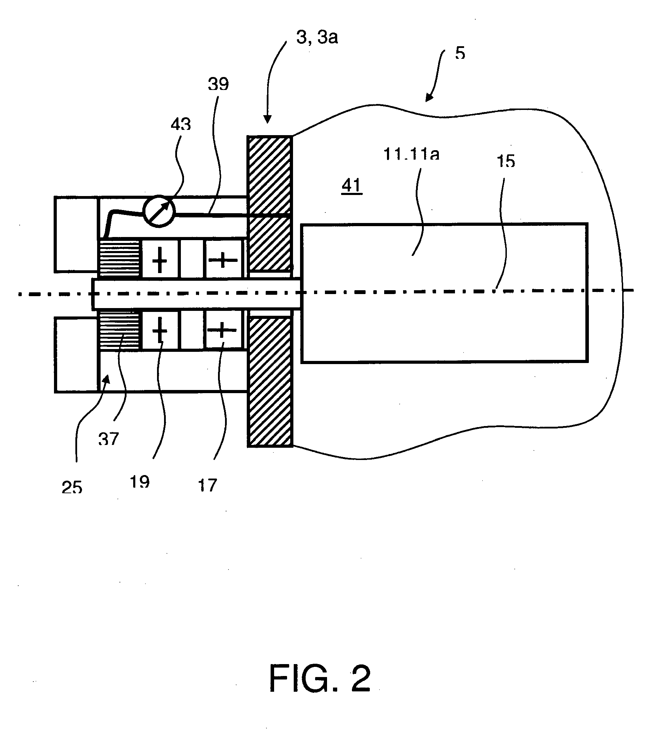

In der in Fig. 2 dargestellten Ausgestaltung ist die hydraulische Stelleinrichtung 37 detaillierter dargestellt. Die Einstellvorrichtung 25 wird dabei durch die hydraulische Stelleinrichtung 37 gebildet. Die hydraulische Stelleinrichtung 37 ist über eine Ausgleichsleitung 39 mit einem Innenraum 41 des Gehäuses 3a verbunden. In die Ausgleichsleitung 39 kann, wie in Fig. 3 dargestellt, ein Druckregler 43 zwischengeschaltet sein. Das Axiallager 19 wird durch die hydraulische Stelleinrichtung 37 in Abhängigkeit eines über die Ausgleichsleitung 39 abgegriffenen Innendruckes im Gehäuse 3a verstellt, um den Axialspalt 23 auf den Sollwert zu regeln. Das Axiallager 19 ist dabei aufgrund der hydraulischen Stelleinrichtung 37 über den fluidischen Druck der Schraubenmaschine 5 nachführbar.

In allen Ausgestaltungen kann als Radiallager 17 ein radiales Zylinderrollenlager verwendet werden. Als Axiallager 19 kann ein Axial-Schrägkugellager verwendet werden Insbesondere kann ein als Radiallager 17 dienendes radiales Zylinderrollenlager mit einem als Axiallager 19 dienenden Axial-Schrägkugellager kombiniert sein. Das Radiallager 17 kann zusammen mit dem Axiallager 19 in einer Lagereinheit, die insbesondere an die Schraubenmaschine 5 angeflanscht werden kann, zusammengefasst sein.

### Bezugszeichenliste

- 1: Wandabschnitt
- 3: Referenzbauteil
- 3a: Gehäuse
- 5: Schraubenmaschine
- 7: Öffnung
- 9: Welle
- 11: Maschinenbauteil
- 11a: Schraube
- 13: Wälzlageranordnung
- 15: Achse
- 17: Radiallager
- 19: Axiallager
- 21: Bezugsfläche
- 23: Axialspalt
- 25: Einstellvorrichtung
- 29: Ermittlungseinrichtung
- 31a, 31b: Sensoren
- 35: Regler
- 37: hydraulische Stelleinrichtung
- 39: Ausgleichsleitung
- 41: Innenraum
- 43: Druckregler

## Patentansprüche

1. Wälzlageranordnung zum drehbaren Lagern eines mit einer Welle (9) verbundenen Maschinenbauteils (11) in einer Position bezüglich eines Referenzbauteils (3), aufweisend ein Gehäuse (3a), eine Schraubenmaschine (5), eine mit einer Welle (9) verbundene Schraube (11a) als Maschinenbauteil (11) der Schraubenmaschine (5), ein Referenzbauteil (3) der Schraubenmaschine (5), ein zwischen der Schraube (11a) und dem Referenzbauteil (3) sich bildender Axialspalt (23), ein Radiallager (17), ein positionierbares Axiallager (19) und eine Einstellvorrichtung (25) zum Einstellen eines Axialspaltes (23) zwischen dem Maschinenbauteil (11) und dem Referenzbauteil (3) durch automatisches Verstellen des positionierbaren Axiallagers (19), **dadurch gekennzeichnet, dass** die Einstellvorrichtung (25) eine hydraulische Stelleinrichtung (37) zum Positionieren des Axiallagers (19) aufweist und eingerichtet ist, das Axiallager (19) in Abhängigkeit eines Innendruckes im Gehäuse (3a) zu verstellen, um den Axialspalt (23) auf einen Sollwert zu regeln.

2. Wälzlageranordnung nach Anspruch 1, bei der die hydraulische Stelleinrichtung (37) eine Hydraulikmutter aufweist.

3. Wälzlageranordnung nach einem der Ansprüche 1 oder 2, bei der die hydraulische Stelleinrichtung (37) eingerichtet ist, den Axialspalt (23) zwischen dem Maschinenbauteil (11) und dem Referenzbauteil (3), insbesondere einem Gehäuse (3a) während des Betriebs der Wälzlageranordnung (13) einzustellen, insbesondere nachzustellen.

4. Wälzlageranordnung nach einem der Ansprüche 1 bis 3, bei der die hydraulische Stelleinrichtung (37) eine Ermittlungseinrichtung (29) für den Axialspalt (23) aufweist und eingerichtet ist, das positionierbare Axiallager (19) in Abhängigkeit eines von der Ermittlungseinrichtung (29) ermittelten Wertes zu verstellen.

5. Wälzlageranordnung nach Anspruch 4, bei der die hydraulische Stelleinrichtung (37) eingerichtet ist, den Axialspalt (23) aufgrund eines von der Ermittlungseinrichtung (29) bestimmten Wertes zu regeln.

6. Wälzlageranordnung nach Anspruch 4 oder 5, bei der die Ermittlungseinrichtung (29) für den Axialspalt (23) wenigstens einen den Axialspalt (23) erfassenden Sensor (31a, 31b) aufweist.

7. Wälzlageranordnung nach Anspruch 6, bei der der Sensor (31a, 31b) eingerichtet ist, einen axialen Abstand zwischen dem Maschinenbauteil (11) und dem Referenzbauteil (3), insbesondere dem Gehäuse (3a) zu messen, insbesondere in einem Messbereich zwischen 500 und 5 Mikrometer zu messen.

8. Wälzlageranordnung nach Anspruch 6 oder 7, bei der der Sensor (31a, 31b) am Referenzbauteil (3), insbesondere dem Gehäuse (3a) angeordnet und zur Messung eines axialen Abstands zwischen einer Bezugsfläche (21) des Maschinenbauteils (11) und dem Sensor (31 a, 31 b) ausgebildet ist.

9. Wälzlageranordnung nach einem der Ansprüche 1 bis 8, bei der das Maschinenbauteil (11) eine Schraube (11a) eines Schraubenkompressors oder einer Schraubenpumpe ist.

## Claims

1. Rolling bearing arrangement for the rotatable mounting of a machine component (11), connected to a shaft (9), in a position in relation to a reference component (3), having a housing (3a), a screw machine (5), a screw (11a), connected to a shaft (9), as a machine component (11) of the screw machine (5), a reference component (3) of the screw machine (5), an axial gap (23) formed between the screw (11a) and the reference component (3), a radial bearing (17), a positionable axial bearing (19) and a setting device (25) for setting an axial gap (23) between the machine component (11) and the reference component (3) by means of the automatic adjustment of the positionable axial bearing (19), **characterized in that** the setting device (25) has a hydraulic actuating device (37) for positioning the axial bearing (19) and is designed to adjust the axial bearing (19) as a function of an internal pressure in the housing (3a) in order to regulate the axial gap (23) to a desired value.

2. Rolling bearing arrangement according to Claim 1, in which the hydraulic actuating device (37) has a hydraulic nut.

3. Rolling bearing arrangement according to either one of Claims 1 and 2, in which the hydraulic actuating device (37) is designed to set, in particular to reset, the axial gap (23) between the machine component (11) and the reference component (3), in particular a housing (3a), during the operation of the rolling bearing arrangement (13).

4. Rolling bearing arrangement according to one of Claims 1 to 3, in which the hydraulic actuating device (37) has a determination device (29) for the axial gap (23) and is designed to adjust the positionable axial bearing (19) as a function of a value determined by the determination device (29).

5. Rolling bearing arrangement according to Claim 4, in which the hydraulic actuating device (37) is designed to regulate the axial gap (23) on the basis of a value determined by the determination device (29).

6. Rolling bearing arrangement according to Claim 4 or 5, in which the determination device (29) for the axial gap (23) has at least one sensor (31a, 31b) detecting the axial gap (23).

7. Rolling bearing arrangement according to Claim 6, in which the sensor (31a, 31b) is designed to measure an axial distance between the machine component (11) and the reference component (3), in particular the housing (3a), in particular in a measurement range of between 500 and 5 micrometres.

8. Rolling bearing arrangement according to Claim 6 or 7, in which the sensor (31a, 31b) is arranged on the reference component (3), in particular the housing (3a), and is designed to measure an axial distance between a reference surface (21) of the machine component (11) and the sensor (31a, 31b).

9. Rolling bearing arrangement according to one of Claims 1 to 8, in which the machine component (11) is a screw (11a) of a screw-type compressor or of a screw-type pump.

## Revendications

1. Ensemble palier à roulement pour monter à rotation un composant de machine (11) relié à un arbre (9), dans une position par rapport à un composant de référence (3), comprenant un boîtier (3a), une machine à vis (5), une vis (11a) reliée à un arbre (9) en tant que composant de machine (11) de la machine à vis (5), un composant de référence (3) de la machine à vis (5), un interstice axial (23) se formant entre la vis (11a) et le composant de référence (3), un palier radial (17), un palier axial (19) pouvant être positionné et un dispositif d'ajustement (25) pour ajuster un interstice axial (23) entre le composant de machine (11) et le composant de référence (3) par déplacement automatique du palier axial (19) pouvant être positionné, **caractérisé en ce que** le dispositif d'ajustement (25) comprend un dispositif de réglage hydraulique (37) pour positionner le palier axial (19) et est conçu pour déplacer le palier axial (19) en fonction d'une pression interne dans le boîtier (3a), afin de régler l'interstice axial (23) à une valeur de consigne.

2. Ensemble palier à roulement selon la revendication 1, dans lequel le dispositif de réglage hydraulique (37) comprend un écrou hydraulique.

3. Ensemble palier à roulement selon l'une quelconque des revendications 1 et 2, dans lequel le dispositif de réglage hydraulique (37) est conçu pour ajuster, en particulier compenser, l'interstice axial (23) entre le composant de machine (11) et le composant de référence (3), en particulier un boîtier (3a), pendant le fonctionnement de l'ensemble palier à roulement (13).

4. Ensemble palier à roulement selon l'une quelconque des revendications 1 à 3, dans lequel le dispositif de réglage hydraulique (37) comprend un dispositif de détermination (29) pour l'interstice axial (23) et est conçu pour déplacer le palier axial (19) pouvant être positionné en fonction d'une valeur déterminée par le dispositif de détermination (29).

5. Ensemble palier à roulement selon la revendication 4, dans lequel le dispositif de réglage hydraulique (37) est conçu pour régler l'interstice axial (23) en raison d'une valeur déterminée par le dispositif de détermination (29).

6. Ensemble palier à roulement selon la revendication 4 ou 5, dans lequel le dispositif de détermination (29) pour l'interstice axial (23) comprend au moins un capteur (31a, 31b) détectant l'interstice axial (23).

7. Ensemble palier à roulement selon la revendication 6, dans lequel le capteur (31a, 31b) est conçu pour mesurer une distance axiale entre le composant de machine (11) et le composant de référence (3), en particulier le boîtier (3a), en particulier pour mesurer dans une plage de mesure entre 500 et 5 micromètres.

8. Ensemble palier à roulement selon la revendication 6 ou 7, dans lequel le capteur (31a, 31b) est disposé sur le composant de référence (3), en particulier le boîtier (3a), et est conçu pour mesurer une distance axiale entre une surface de référence (21) du composant de machine (11) et le capteur (31a, 31b).

9. Ensemble palier à roulement selon l'une quelconque des revendications 1 à 8, dans lequel le composant de machine (11) est une vis (11a) d'un compresseur à vis ou d'une pompe à vis.
